# EUROPEAN PATENT SPECIFICATION

(11) **EP 4 247 173 B1**
(45) Date of publication and mention of the grant of the patent: **13.08.2025**
(21) Application number: 21894181.3
(22) Date of filing: 25.10.2021
(51) Int. Cl.: A23B 2/788, A23B 7/157, A23B 7/148, A23B 7/158, A23L 5/00, B65B 5/04, B65B 7/28, B65B 25/04, B65B 35/24, B65B 55/18, B65B 55/22

(54) **A METHOD AND SYSTEM FOR PRESERVATION OF MINIMALLY PROCESSED FRUIT OR VEGETABLES**
VERFAHREN UND SYSTEM ZUR KONSERVIERUNG VON MINIMAL VERARBEITETEN FRÜCHTEN ODER GEMÜSEN
PROCÉDÉ ET SYSTÈME DE CONSERVATION DE FRUITS OU DE LÉGUMES TRAITÉS AU MINIMUM

(30) Priority: 17.11.2020 IL 27878020
(43) Date of publication of application: 27.09.2023
(73) Proprietor: Beth-El Machinery Ltd., 3095101 Zikhron Yaaqov (IL)
(72) Inventor: FUCHS, Simon, 3095101 Zikhron Yaaqov (IL)
(74) Representative: Autuori & Partners S.R.L.
(86) International application number: PCT/IL2021/051260
(87) International publication number: WO 2022/107119

(56) References cited:
- EP-B1- 0 749 897
- CN-A- 103 190 474
- CN-U- 210 671 926
- ES-A1- 2 364 478
- KR-A- 20180 079 851
- US-A1- 2019 230 948
- US-A1- 2019 230 948
- DE CORATO UGO: "Improving the shelf-life and quality of fresh and minimally-processed fruits and vegetables for a modern food industry: A comprehensive critical review from the traditional technologies into the most promising advancements", CRITICAL REVIEWS IN FOOD SCIENCE AND NUTRITION, vol. 60, no. 6, 7 January 2019 (2019-01-07), USA, pages 940 - 975, XP093185411, ISSN: 1040-8398, DOI: 10.1080/10408398.2018.1553025
- JAMES B JENNYLYND ET AL: "Processing of fresh-cut tropical fruits and vegetables: A TECHNICAL GUIDE", RAP PUBLICATION 2010/16, 1 January 2011 (2011-01-01), Bangkok, pages 1 - 86, XP055745456, ISBN: 978-92-5-106712-3, Retrieved from the Internet <URL:https://efaidnbmnnnibpcajpcglclefindmkaj/https://www.fao.org/4/i1909e/i1909e00.pdf> [retrieved on 20201030]
- TAKEYA SATOSHI; NAKANO KOHEI; THAMMAWONG MANASIKAN; UMEDA HIROKI; YONEYAMA AKIO; TAKEDA TOHORU; HYODO KAZUYUKI; MATSUO SEIJI: "CO2processing and hydration of fruit and vegetable tissues by clathrate hydrate formation", FOOD CHEMISTRY, ELSEVIER LTD., NL, vol. 205, 3 March 2016 (2016-03-03), NL , pages 122 - 128, XP029466364, ISSN: 0308-8146, DOI: 10.1016/j.foodchem.2016.03.010
- DHINESH KUMAR V., ET AL.: "Study on effect of Carbonation on Storage and Stability of Pomegranate Fruit Juice", NT J NUTR SCI & FOOD TECH., vol. 2, no. 2, 20 December 2016 (2016-12-20), pages 48 - 52, XP055932291, DOI: 10.25141/2471-7371-2016-2.0048

## Description

### FIELD OF THE INVENTION

The present invention relates to a method and system for fruit or vegetable preservation and more particularly to a method and system for long term preservation of ready to eat minimally processed fruit or vegetable, while retaining the nutrition properties, textural appearance and taste of the fresh fruit or vegetable.

### BACKGROUND OF THE INVENTION

Minimally processed ready to eat fruit or vegetables, sometimes called "fresh-cut", "ready to use", "pre-cut," or "value added" produce, are fruit or vegetables or combination thereof that has been physically altered from its whole state after being harvested from the field (e.g., by washing, peeling, trimming, chopping, dicing, ricing, shredding, slicing, or tearing) without additional processing (such as pasteurizing, blanching or cooking) in order to obtain fully edible product while maintaining the nutrients level and the taste of freshness. Typically the end product is sealed with an appropriate package, and refrigerated during transportation and at the sell point. Minimally processed produce may include for example: vegetable salads, apples, pineapple, peach, cherry, strawberry, melon, water melon and virtually any vegetable or fruit.

Minimally processed produce can become contaminated with human pathogens and spoiling microorganisms such as bacteria viruses and spores. The contamination can occur during crop, harvesting and processing. Microbial growth on cut products is significantly faster than in products that have not been cut. The removal of the natural protective peel, exposes the internal pores and promotes the growth of harmful microorganisms and accelerate enzymatic activity. Thus, shelf life of processed fruits and vegetables is limited mainly by microbial growth and enzymatic activity.

The shelf life of minimally processed ready to eat fruit or vegetable without preservation process is typically between few hours and up to about two weeks depending on the surrounding temperature and the type of fruit or vegetable. A storage temperature of between 1°C to 2°C provides the maximum period of about two weeks. More drastic preservation methods such as freezing and pasteurizing significantly reduce the nutrition value as well as the textural appearance and taste of freshness.

Due to the growing demand for ready to eat fresh produce, extending the shelf life of minimally processed fruit or vegetable received great attention during the last decades. The contribution of Carbon dioxide treatment to extending the shelf life of fruits and juices is well known in the industry.

US 226094A to Mefford, granted as early as 1880, describes a process of preserving fruits which consists in subjecting such fruits, in a tree-ripe condition, to carbonic-acid gas or Carbon dioxide under pressure until saturated therewith, and then removing the fruit from the presence of the gas in the receiver.

US 1336720 to Baulig, granted in 1920, describes a process of treating fruit juice comprising charging sterilized juice in sterile condition in sealed containers with carbonating gas while maintaining the juice at all times free from contact with air and in sterile condition.

GB 2205478A to Price, published in 1988, describes a method of preserving fresh fruit and vegetables comprising contacting therewith an anti-oxidant, and thereafter storing sealably under a gas of 0.5% to 10% oxygen, 20% to 50% Carbon dioxide, the balance being nitrogen.

WO 2005117598A2 to Kegler, published in 2005, describes a method of enhancing the flavor of fruits or vegetables within its own product packaging to extend the shelf life and allow for mass production and mass distribution of the flavor enhanced fruits or vegetables, the method comprising: providing product packaging capable of retaining a positive pressure of CO₂, receiving fruits or vegetables into said product packaging, introducing CO₂ into said product packaging, and sealing said product packaging containing said fruits or vegetables and said CO₂, wherein said product packaging retains said positive pressure of CO₂, and said fruits or vegetables absorb said CO₂ thereby enhancing the flavor of said fruits or vegetables within said product packaging.

CN210671926U to Shengzhou, published in 2020, describes a system comprising an automatic feeding platform., a cleaning tank, a plasma activation water preparing machine, a dewatering belt, a negative hydrogen ion water spraying box, a drying and dehydrating machine, cutting-weighing platform, an ultraviolet sterilizing lamp, a tenary (O2, CO2, N2) atmosphere/skin packaging machine, a low temperature storehouse, a filtering tank and a circulating water pump.

However, Carbon dioxide treatment by its own only extends the shelf life at the magnitude of weeks, while it is desired that the fruit or vegetable will be available year around and not only during the growth season.

Accordingly there is a need to further improve the preservation technology of minimally processed ready to eat fruit or vegetables, in order to extend the shelf life to about six months.

### SUMMARY OF THE INVENTION

Consequently, it is a principal object of the present invention to provide a method and system for long term preservation of ready to eat minimally processed fruit or vegetable, while retaining the nutrition properties, textural appearance and taste of the fresh fruit or vegetable.

According to an aspect of the present invention there is provided a method comprising the steps of:
a. Providing at least: a fruit or vegetable, a sterilized seal-able package and a carbonated liquid.
g. Processing the fruit or vegetable by at least washing and disinfecting the exterior of the fruit or vegetable.
k. Placing the processed fruit or vegetable into the sterilized seal-able package.
l. Filling the remaining volume of the seal-able package with the carbonated liquid.
m. Sealing the seal-able package. And
n. storing the sealed package at a storage temperature of between 1°C to 40°C.

Wherein steps g, k, l and m are performed under a disinfected processing environment.

According to another aspect, the method further comprises after step g, the step of: h. Removing the disinfecting solution from the minimally processed fruit or vegetable with forced clean air filtered through a HEPA filter of at least H13 HEPA class.

According to another aspect, the method further comprises after step a, the step of: c. Prewashing and disinfecting the exterior of the fruit or vegetable with chilled disinfecting solution comprising water and an oxidizing agent.

According to another aspect, the method further comprises after step c, the step of: d. Removing the disinfecting solution from the fruit or vegetable with forced air.

According to another aspect, the method further comprises after step d, the step of: e. Keeping the minimally processed fruit or vegetable which are not directly packaged, in a cooled, dry, well-ventilated storage, out of direct sunlight.

According to another aspect, the method further comprises after step e, the step of:
f. Processing the fruit or vegetable by physically altering the fruit or vegetable from its whole state in order to obtain a fully edible product.

According to yet another aspect, the method further comprises after step g, the steps of:
i. Squeezing a portion of the minimally processed fruit or vegetable to fresh juice, without addition of preservatives. And
j. carbonizing the fresh squeezed fruit or vegetable juice with CO₂ serving as a preservation enhancer.

According to an additional aspect of the invention, there is provided a system to perform the above method steps. The system comprising:
a) A conveyor provided with a washable transport surface, the transport surface comprising perforations smaller than the minimally processed fruit or vegetable.
b) A longitudinal shield surrounding the conveyor along a processing area, configured to prevent external contamination and enclose an over pressure disinfecting environment in the processing area.
c) A loading zone located adjacent a first end of the conveyor out of the processing area.
d) A first disinfection zone located along the conveyor within the processing area, the first disinfection zone comprising a plurality of emitters of a disinfectant solution.
e) A package filling zone for minimally processed fruit or vegetable, located in the processing area after the disinfectant removal zone.
f) A liquid filling zone located in the processing area after the package filling zone.
g) A sealing zone located in the processing area after the liquid filling zone.

Wherein the conveyor speed is set to maintain the minimally processed fruit or vegetable at least 15 seconds within the disinfection zone, the temperature in the processing area is set between 1°C and 40°C, the disinfectant solution is thoroughly wetting the minimally processed fruit or vegetable, and the liquid used in the liquid filling zone is a carbonated liquid.

More specific aspects of the invention are provided in the claims below.

### BRIEF DESCRIPTION OF THE DRAWINGS

The invention and the way it may be carried out in practice will be understood with reference to the following schematic diagrams, by way of non-limiting example only, in which like reference numerals identify like elements, and in which:
Fig. 1 is a flow chart defining the essential method steps according to an embodiment of the invention;
Fig. 2 is a flow chart as in Fig. 1, defining additional optional method steps according to another embodiment of the invention;
Fig. 3 is a flow chart as in Fig. 2, defining further optional method steps according to yet another embodiment of the invention;
Fig. 4 is a flow chart as in Fig. 3, defining further optional method steps according to an additional embodiment of the invention;
Fig. 5 is a schematic diagram of a minimal system made according to an embodiment of the invention;
Fig. 6 is a schematic diagram of a system as in Fig. 5,with additional optional elements made according to another embodiment of the invention;
Fig. 7 is a schematic diagram of a system as in Fig. 6, with additional optional elements made according to yet another embodiment of the invention; and
Fig. 8 is a schematic diagram of a system as in Fig. 7, including further optional elements according to an additional embodiment of the invention.

### DETAILED DESCRIPTION OF EMBODIMENTS

Several terms relating to the present invention will be defined prior to describing the invention in detail. It should be noted that the following definitions are used throughout this application.

For the purpose of the present invention the term "substantially" refers to a value in the range between 80% to 120% of the stated value.

For the purpose of the present invention the term "plant produce" refers to the edible portion of plants as a whole (prior to peeling or cutting), such as unprocessed fruit or vegetable or combination thereof.

Many common terms for seeds and fruit do not correspond to the botanical classifications. In culinary terminology, a fruit is usually any sweet-tasting plant part, especially a botanical fruit. A nut is any hard, oily, and shelled plant produce. and a vegetable is any savory or less sweet plant produce. However, in botany, a fruit is the ripened ovary or carpel that contains seeds, a nut is a type of fruit and not a seed, and a seed is a ripened ovule. For the purpose of the present invention both terminology may apply.

For the purpose of the present invention the term "minimally processed" refers to a fruit or vegetables or combination thereof (plant produce) that has been physically altered from its whole state after being harvested from the field (e.g., by washing, opening, pealing, trimming, cutting, slicing, chopping, dicing, ricing, shredding, deseeding, separating, extracting and tearing) without additional processing (such as pasteurizing, freezing, blanching or cooking) in order to obtain fully edible product while maintaining the nutrients level, textural and the taste of freshness.

The present invention relates to a method and system for long term preservation of ready to eat minimally processed fruit or vegetable, while retaining the nutrition properties , textural appearance and taste of the fresh fruit or vegetable. The goal is to enable storing of ready to eat minimally processed season plant produce all year round in packages suitable for marketing and easy consuming. Such that by opening the package the minimally processed fresh fruit or vegetable can be spoon-able consumed without removing any kind of skin or peel.

By nature, the interior of fruits and vegetables are normally kept healthy and sterile by the protection of a skin or peel. However during harvesting, mechanical damages are caused to the skin or peel such that large amount of the plant produce are susceptible to infection. Additionally, by further peeling, cutting and processing the natural protection is lost and the internal of the plant produce can be rapidly contaminated and eventually spoiled.

Although the present invention provides a method and system for preservation of all kinds of fruit and vegetable, the natural difference in size and shape may require some different embodiments to cover all alternatives. For example cherry, strawberry and raspberry may be preserved without peeling and cutting. Accordingly the following detailed embodiments will differ in order to cover all kinds of minimally processed plant produce.

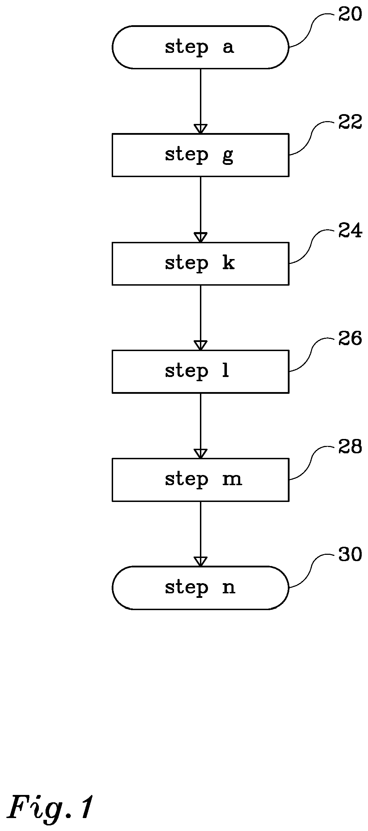

According to an embodiment of the present invention there is provided a method for long term preservation of ready to eat minimally processed fruit or vegetable while retaining the nutrition properties, textural appearance and taste of the fresh fruit or vegetable. With reference to Fig. 1, for such plant produce that do not need peeling or cutting, the method includes the essential steps of:
a. Providing at least: a fruit or vegetable, a sterilized seal-able package and a carbonated liquid. Step a, is the starting step, marked with the numeral 20 in Fig. 1.

Some optional steps may follow between the above step a, and the below step g, however these will be discussed later below. For the basic process the next step is:
g. Processing the fruit or vegetable by at least washing and disinfecting the exterior of the fruit or vegetable. Step g, is marked 22 in Fig. 1.

Some optional steps may follow between the above step g, and the below step k, however these will be described later below. For the basic process the following steps are:
k. Placing the processed fruit or vegetable into the sterilized seal-able package. Step k, is marked 24 in Fig. 1.
l. Filling the remaining volume of the seal-able package with the carbonated liquid. Step 1, is marked 26 in Fig. 1.
m. Sealing the seal-able package. Step m, is marked 28 in Fig. 1. And the final step of:
n. Storing the sealed package at a storage temperature of between 1°C to 40°C. Step n, is marked 30 in Fig. 1.

In order to improve the results, steps g, k, l and m are performed under a disinfected processing environment as will be further explained below.

Preferably, the fruit or vegetable provided for processing as mentioned in step a, are chosen during harvesting to include undamaged fruit or vegetable. The sterilized seal-able package mentioned in step a, may be any flexible or rigid package capable to hold positive pressure of the carbonated liquid. For instance, a glass or plastic bottle or jar provided with a positive pressure holding hermetic cap may be used. The packages may be supplied sterilized or locally sterilized prior to filling.

While in step n, storage temperature of the filled and sealed package can reach 40°C without structural damage to the content, it is preferred for prolonged storage periods that the storage temperature is kept between 1°C to 12°C.

The above mentioned carbonated liquid in step a, can be produced by dissolving Carbon dioxide (CO₂) gas into the liquid. An optional way to carry out carbonation is by introduction of Carbon dioxide gas under certain pressure and temperature conditions to the liquid. The set conditions are applied for a certain period of time sufficient to achieve partial or full saturation of the liquid with Carbon dioxide gas. The pressurized gas process is typically used in the production of soft carbonated drinks and soda water. The process may utilize cooled Carbon dioxide in the solid state (dry ice) instead of pressurized Carbon dioxide gas. The carbonation process can also be executed in a natural way utilizing anaerobic microorganism such as fungus or specifically yeast as known from Beer fermentation.

The dissolved Carbon dioxide acts against growth of anaerobic bacteria, by means of the CO₂ pressure preventing production of additional CO₂ which is the by-product of fermentation. **In** addition, it prevents formation of aerobic bacteria by replacing the oxygen needed for their growth.

An additional effect of the disinfection step g, as described above, is achieved when the washing and disinfecting of the exterior of the fruit or vegetable are made with a chilled disinfecting solution. By the use of chilled disinfecting solution the fruit or vegetable are cooled and an undesired enzymatic activity is significantly slowed, while the plant produce is externally disinfected at the same process step. It was recognized that disinfecting solution chilled to between 2°C and 4°C is effectively cooling the processed plant produce.

The disinfecting solution may include water and an oxidizing agent (in an aquas solution), regardless of any other additives that may be used. Some options for oxidizing agent that can be used in the aquas solution are Hypochlorite, Hydrogen-peroxide or Ozone for example. **In** one embodiment, the oxidizing agent is ozone, provided as an aqueous ozone solution at a concentration of less than 5PPM. **In** normal operating conditions the concentration should be between 0.5PPM to 2.0PPM. It is shown to render good results when the aqueous ozone solution is applied for a duration of between 0.25 to 6 minutes.

As mentioned above the process is made in a disinfected processing environment. Typically the disinfection is achieved by applying a slight over-pressure of a disinfecting gas in the processing area. **In** some embodiments, the disinfecting gas is naturally accepted by evaporation of the above described oxidizing agent. The concentration of the oxidizing agent in the air after emission and evaporation, under normal processing parameters when applied to substantially 5 minutes, should not exceed 100PPM. In case of ozone, the concentration of ozone in the air after emission and evaporation should not exceed 200PPM. Other embodiments may use Hypochlorite or Hydrogen-peroxide as the oxidizing agent, while using ozone for disinfection of the processing area.

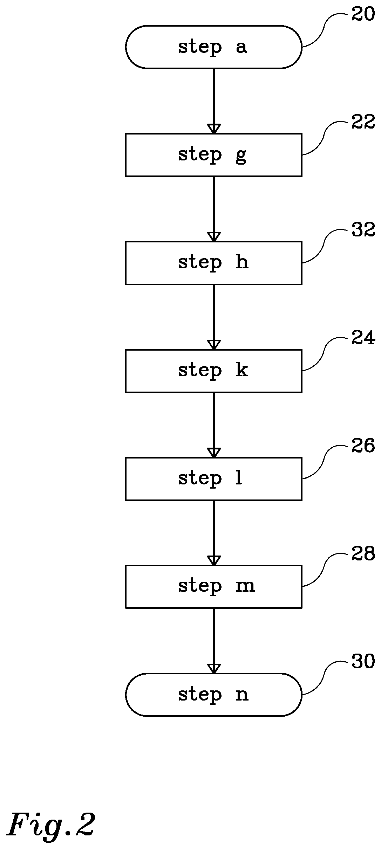

Residuals of disinfectant solution are undesired and should be removed prior to the packaging stage. The disinfectant solution may be removed by natural evaporation, however an optional active and faster process step may be performed. Accordingly and with reference to fig. 2, an additional step is provided after step g, and before step k, the further step propose:
h. Removing the disinfecting solution from the minimally processed fruit or vegetable with forced clean air. The air is filtered through a HEPA filter of at least H13 HEPA class in order to prevent contamination of the already disinfected plant produce. Step h, is marked 32 in Fig. 2.

As mentioned above, the natural difference in size and shape of plant produce, may require some different embodiments of the process to cover all possibilities. For example Orange, Apple, Melon, Mango and Pomegranate are typically peeled and cut or separated before packaging. Consequently the following embodiments will include some additional process steps in order to cover processing of such plant produce.

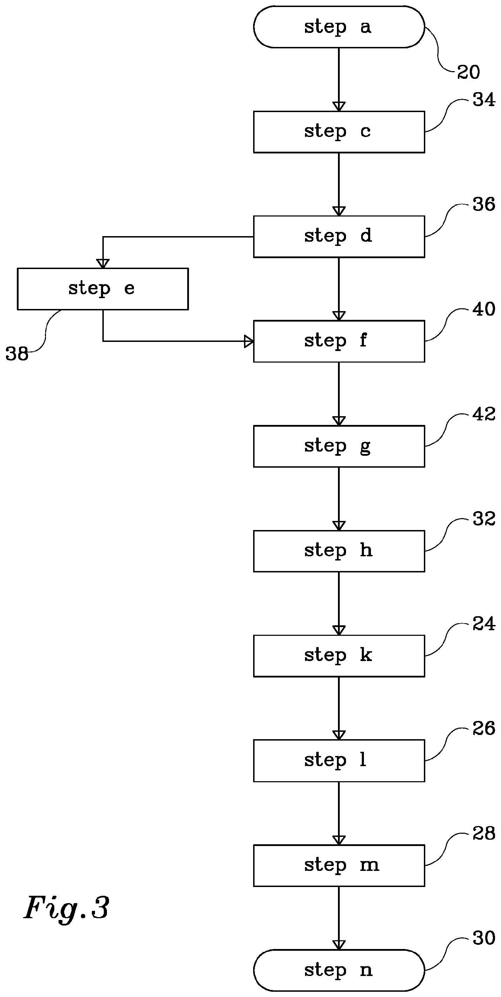

Accordingly and with reference to Fig. 3, there are provided optional process steps after step a, and before step g, proposing:
c. Prewashing and disinfecting the exterior of the fruit or vegetable with chilled disinfecting solution including water and an oxidizing agent. Step c is marked 34 in fig. 3.
d. Removing the disinfecting solution from the fruit or vegetable with forced air. Step d is marked 36 in Fig. 3. The disinfecting solution may include one of the oxidizing agents described above with reference to step g.

In some cases the process may have smaller capacity than the actual amount of harvested plant produce which is ready for processing. In such cases there is a need to delay the processing of a portion of the plant produce. An optional step after step d, proposes:
e. Keeping the minimally processed fruit or vegetable which are not directly packaged, in a cooled, dry, well-ventilated storage, out of direct sunlight. Step e is marked 38 in Fig. 3. Such plant produce that passed the prewashing and disinfecting step may be stored for a prolonged period of up to two months before further processing and packaging, depending on the kind of the plant produce.

Whether the plant produce is directly processed or processed after storage, the upcoming step after step d or e, is the step of:
f. Processing the fruit or vegetable by physically altering the fruit or vegetable from its whole state in order to obtain a fully edible product. Step f is marked 40 in Fig. 3.

Step f, may use any kind of processing suitable for fruit or vegetable. For example the processing may use one or more of the following process types: opening, pealing, trimming, cutting, slicing, chopping, dicing, ricing, shredding, deseeding, separating, extracting and tearing. The processing step f, as well as the following steps up to and including the packaging as described herein below, must be made in a clean processing area so that no microorganism can develop during the fruit processing. The processing area as mentioned above, is entirely and continuously kept under disinfecting environment, such environment may include ozone gas at a concentration of between 30 to 200 PPM. In addition to the disinfecting environment applied in steps g and f, any process equipment coming into contact with the processed plant produce, such as for example a conveyor belt supporting the processed plant produce or one or more cutting knife used in the process, are intermittently disinfected by aqueous ozone solution with concentration of between 1PPM to 2 PPM.

For the purpose of preserving the natural texture and shape of the processed fruit or vegetable, and to avoid structural softening, the carbonated liquid mentioned in step a, above should have substantially the same pH value and same dissolved matter content as the minimally processed fruit or vegetable. For example the sugar content in the carbonated liquid measured by the Brix value should be substantially the same as in the processed plant produce. The pH value and dissolved matter content are the factors required to obtain osmotic pressure balance between the carbonated liquid and the minimally processed fruit or vegetable. Thus preventing undesired shrink or swell in the individual cells of the plant produce, and retaining the natural shape and texture of the fresh fruit or vegetable. Optionally, the carbonated liquid may be cooled to between 1°C and 4°C to minimize enzymatic activity during the process.

A simple way to achieve such osmotic pressure balance between the processed plant produce and the carbonated liquid may be obtained by using a fresh squeezed fruit or vegetable Juice, which has close parameters to that of the plant produce. The use of a fruit or vegetable juice also reduces enzymatic activity of the processed plant produce and extend the shelf life. Different fruit or vegetable mixes or juice mixes can be packed together to provide a rich and tasteful content. An even more accurate way to obtain optimal compatibility is achieved when the carbonated liquid is a fresh squeezed fruit or vegetable Juice, made of the same type of fruit or vegetable as the minimally processed fruit or vegetable.

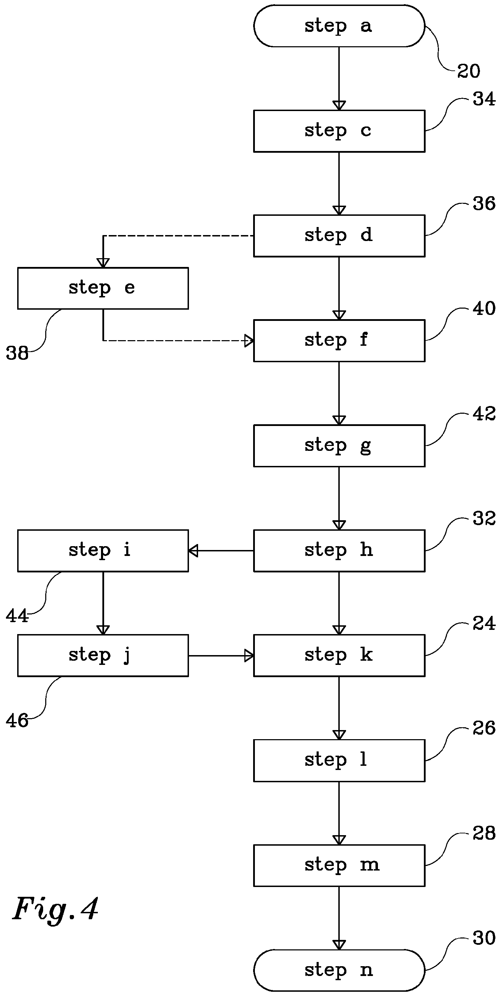

For that purpose, and with reference to Fig. 4, the process may include after step g or h, depending on the selected previous process steps, the steps of:
i. Squeezing a portion of the minimally processed fruit or vegetable to fresh juice, without addition of preservatives. Step I is marked 44 in Fig. 4. And the following step of:
j. Carbonizing the fresh squeezed fruit or vegetable juice with CO₂ serving as a preservation enhancer. Step j is marked 46 in Fig. 4.

By applying steps i and j it is assured that the carbonated liquid has an optimal compatibility with the processed plant produce. A specific example demonstrating good performance is where the minimally processed fruit or vegetable are pomegranate seeds extracted from a pomegranate and the Juice is a pomegranate juice. The processing of the juice is done under the same cleanliness or sterility level as described above in relation to the processing area, to avoid contamination of the juice by microorganisms. Squeezing the juice from the same batch of the processed plant produce ensures the optimal compatibility.

Carbonation of the juice as described in relation to step j, may be performed by dissolving Carbon dioxide into the juice. During the process, the juice is placed in a pressure holding container such as a stainless steel tank and pressurized Carbon dioxide is bubbled from nozzles located at the bottom of the tank. The Carbon dioxide is applied at a pressure of at least 3bar and typically between 6bar to 8bar, for a sufficient time to reach the required saturation level. The temperature of the juice during carbonation is between 1°C to 10°C, typically 8°C to reduce cooling energy cost. No other preservation means or additives are required for the juice preservation as long as the required cleanliness is maintained.

The level of carbonation varies for each juice formulation, starting from substantially 4g/l (grams per liter) in fruit drinks to 9g/l in soft drinks and 12g/l in soda water. The CO₂ gas content by weight per liter is one of the smallest compared to the other ingredients, but with much importance in regards to the taste and feel of the product. CO₂ is one of the very few gases suitable for providing the effervescence in soft drinks. It is non-toxic, inert, and virtually tasteless and allows for convenient bulk transportation and storage.

Typically, the carbonation process is combined with de-aeration, (removal of air), usually applied to the juice before carbonation. The presence of air can increase the risk of spoilage and oxidative effects such as discoloration and changes of smell or taste, while removal of air and possibly present other gases increases product shelf stability. CO₂ is sometimes used to flush out air, however the use of mechanical de-aerators such as vacuum rotating disc or ultrasound de-aerators, is typically preferred as known in the art.

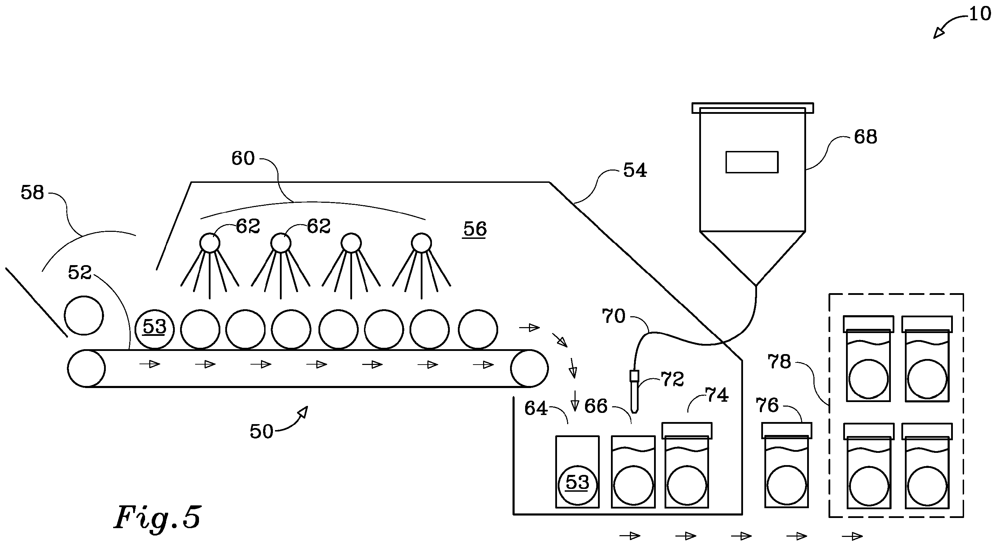

Another object of the present invention is to provide a system capable of performing the process steps described above. Accordingly with reference to Figs. 5 to 8, there is provided a system generally referenced 10, for long term preservation of ready to eat minimally processed fruit or vegetable while retaining the nutrition properties, textural appearance and taste of the fresh fruit or vegetable. A minimal system 10 as shown in Fig. 5, may include:
- A conveyor generally referenced 50 provided with a washable transport surface 52, the transport surface is preferably made of stainless steel in the form of woven wire belt, linked chain elements or perforated flexible sheet provided with perforations smaller than the minimally processed fruit or vegetable 53, such that washing and disinfecting liquids may pass through.
- A longitudinal shield 54 surrounding the conveyor 50 along a processing area 56, configured to prevent external contamination and enclose an over pressure disinfecting environment in the processing area 56.
- A loading zone 58 located adjacent a first end (tail end) of the conveyor out of the processing area 56. In the loading zone 58, plant produce is loaded on the conveyor transport surface 52 and is transported towards the processing area 56 as indicated by arrows along the conveyor 50.
- A first disinfection zone 60 located along the conveyor 50 within the processing area 56. The first disinfection zone is constructed as a multistage process formed by a plurality of emitters 62 of a disinfectant solution arranged along the conveyor 50. **In** a specific embodiment, a series of three or more emitters are arranged along the conveyor to ensure full wetting (contact with disinfectant solution) of the fruit or vegetable.
- A package filling zone or station 64 for minimally processed fruit or vegetable 53, located in the processing area 56 after (downstream) the first disinfection zone 60. **In** the package filling station 64 the processed plant produce 53 is placed into a package 76 such as a bottle or jar. The package filling zone or station may include automatic filling and weighing equipment as known in the art.
- A liquid filling zone or station 66 located in the processing area 56 after (downstream) the package filling zone or station 64. The liquid is preferably a carbonated liquid drown from a container 68 through a pipe 70 and filling nozzle 72. **In** the liquid filling station 66 the remaining volume of the package 76 is filled with carbonated liquid. The liquid filling zone or station may include automatic pouring and weighing equipment as known in the art.
- A sealing zone or station 74 located in the processing area 56 after (downstream) the liquid filling zone or station 66. **In** the sealing station 74 the package 76 is hermetically sealed to hold the positive pressure of the carbonated liquid. The sealing zone or station may include heat sealing equipment or automatic cap placement equipment as known in the art.

The ready to consume filled and sealed package 76 may exit the processing area 56, stacked in an appropriate packaging such carton box 78 and cool stored up to delivery or consumption.

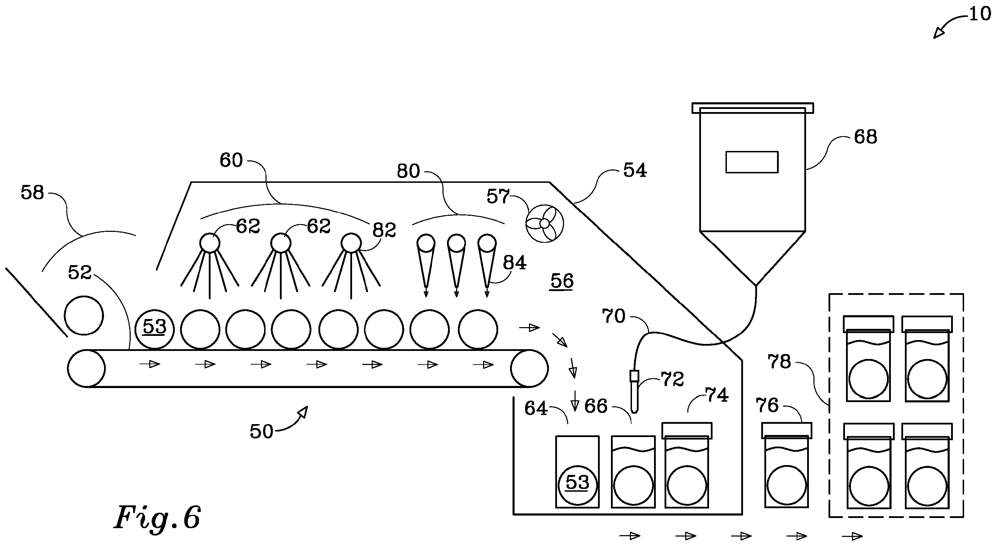

As described above with reference to the method steps, the disinfection solution may be removed by natural evaporation. However with reference to fig. 6, an optional active and faster system element may be used after the processed plant produce has passed the first disinfection zone 60. The additional element including:
- A first disinfectant removal (separation) zone 80 located in the processing area 56 after (downstream) the disinfection zone 60. For this embodiment the package filling zone 64 is located after the described first disinfectant removal zone 80.

For the above system components, some specific data should be noted. The conveyor speed is preferably set to maintain the minimally processed fruit or vegetable at least 15 seconds within the disinfection zone 60, typically no more than 6 minutes are required. The temperature in the processing area 56 is set between 1°C and 40°C. The disinfectant solution should thoroughly wet the minimally processed fruit or vegetable, yet the wetting process should not be aggressive. The wetting process may use a low impact technique to avoid textural damage of the soft tissue of the fruit or vegetable. This may be achieved by producing a turbulent air flow carrying a very fine mist of disinfectant solution. The low impact wetting technique may use specific nozzles 82 appropriate for dripping, soft spraying or such that form a liquid curtain. The disinfectant removal is performed by a thin pattern of airflow known as air knifes 84 of forced filtered air, preferably the air is filtered through a HEPA filters of at least H13 HEPA class.

The processing area 56 is entirely and continuously kept under disinfecting environment, such environment may include ozone gas at a concentration of between 30 to 200 PPM. A slight over-pressure of the gas in the processing area 56, prevents entrance of contaminated air into the processing area 56. If ozone is used as the oxidizing agent in the disinfectant solution, the disinfecting gas is naturally accepted by evaporation of the ozone. However if other disinfectant solution is used in the processing area 56 such as Hypochlorite or Hydrogen-peroxide, than ozone gas should be separately supplied to the processing area 56, by a nozzle and fan 57 (Fig. 6).

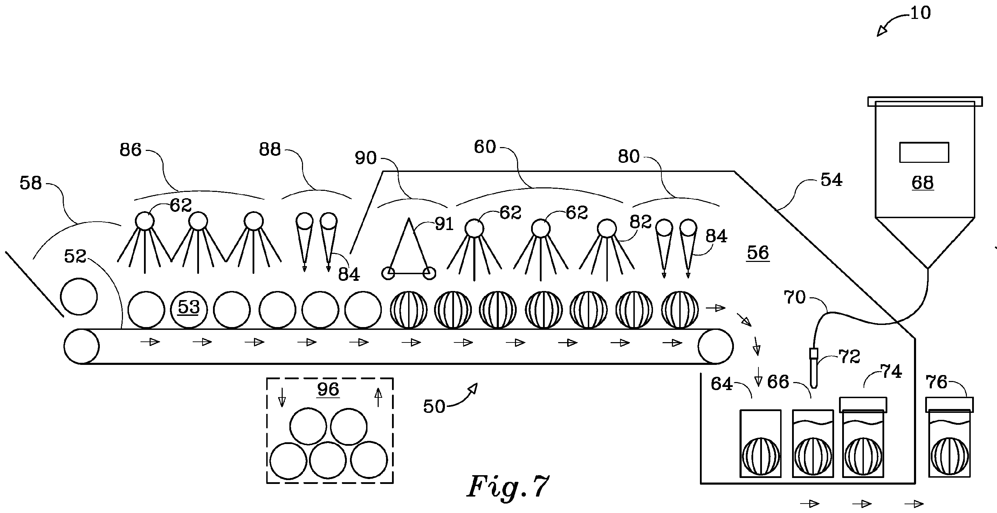

As discussed above in relation to the method steps, large fruit or vegetables may require additional processing such as peeling and cutting. For that purpose and with reference to Fig. 7, the system may further include:
- A second disinfection zone 86 located along the conveyor out of the processing area 56, after (downstream) the loading zone 58, the second disinfection zone 86 includes a plurality of emitters 62 of a disinfectant solution. Typically a series of three emitters are arranged along the conveyor to ensure full wetting of the fruit or vegetable.
- A second disinfectant removal zone 88 located out of the processing area 56 after (downstream) the second disinfection zone 86. The disinfectant removal is performed by a thin pattern of airflow known as air knifes 84 of forced filtered air. The air filtration quality may be of lower degree than that of the first disinfectant removal zone described above, since the plant produce is not yet cut or peeled during this stage.
- A minimal processing zone 90 located in the processing area 56 after (downstream) the second disinfection removal zone 88.

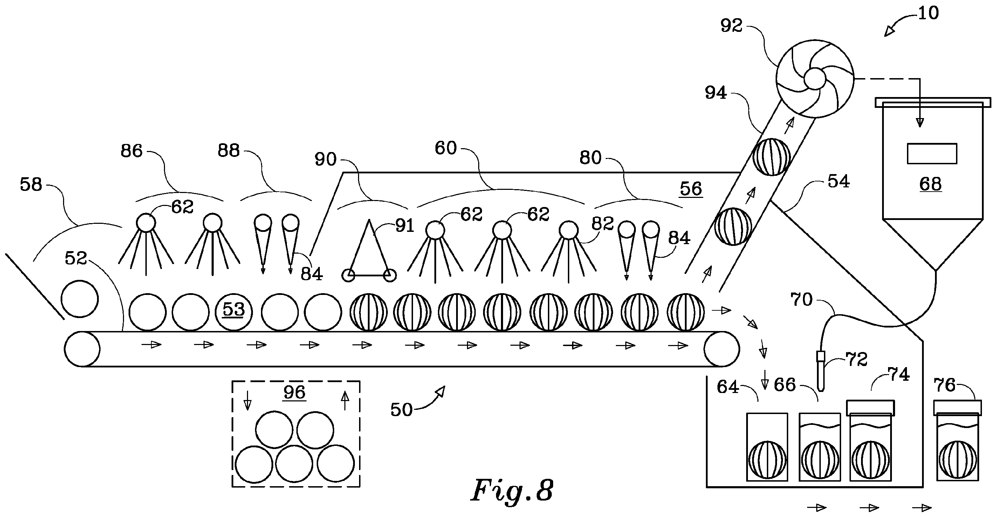

The minimal processing zone is equipped with processing tools 91 that are constructed to perform one or more of the following processes: opening, pealing, trimming, cutting, slicing, chopping, dicing, ricing, shredding, deseeding, separating, extracting and tearing. Automatic processing is preferred to minimize contamination, however manual processing may be possible with wall mounted hand gloves and view windows fitted to the shield 54, as known from the art of glove box. In cases where the minimal processing is not needed, such as for example while processing cherry or strawberry, the above processing tools 91 may be disassembled and stored separately. It should be noted that the minimal processing as described with reference to the minimal processing zone 90, may be done in a different production line and brought under the same disinfecting environmental conditions to the system as described above with reference to Figs. 5 and 6. In Figs. 7 and 8 the plant produce 53 is demonstrated with slicing lines after passing the minimal processing zone 90.

In addition to the disinfecting environment applied in the processing area 56, any process equipment coming into contact with the processed plant produce, such as for example the conveyor belt supporting the processed plant produce or one or more cutting knife or processing tools 91 used in the minimal processing zone 90, are intermittently disinfected by aqueous ozone solution with concentration of between 1PPM to 2 PPM.

The disinfectant solution used at least in the first disinfection zone 60, is made as an aqueous solution of water and an oxidizing agent such as for example: Hypochlorite, Hydrogen-peroxide or ozone. In cases where ozone is used as the oxidizing agent, it should have a concentration of less than 5PPM in the aqueous ozone solution. The concentration of the disinfectant solution depends on the type of fruit or vegetable since some kinds are more sensitive to high concentrations of ozone. For instance pomegranate seeds should be disinfected with an ozone solution having a concentration of 2PPM in the aqueous solution. The concentration of ozone in the air after emission and evaporation should be between 30 to 200PPM.

As described above with reference to the method steps, carbonated fruit or vegetable juice may be used as the carbonated liquid. For that purpose and with reference to Fig. 8, the system may further include:
- A pressure vessel 68 for locally carbonizing or holding ready carbonated liquid. And
- A squeezer 92 to squeeze a portion of the processed fruit or vegetable into a juice, the juice is fed into the pressure vessel 68 and carbonated to serve as the carbonated liquid. An elevator 94 (Fig. 8) or any other transport means may be used to feed a portion of the processed fruit or vegetable into the squeezer. The squeezer may be of the press or centrifugal type as known in the art and depending on the processed plant produce.

In some cases the process may have smaller capacity than the actual amount of harvested plant produce which is ready for processing. In such cases there is a need to delay the processing of a portion of the plant produce. Accordingly with reference to Figs. 7 and 8, in an optional embodiment there is provided a storage 96 for temporary storing plant produce to be processed at a later time. The storage 96 should be kept in a cooled, dry, well-ventilated place, out of direct sunlight. It should be noted that the process made in the second disinfection zone 86 and the second disinfectant removal zone 88 may be performed separately on a different system and brought to one of the systems as described above with reference to Figs. 5 and 6. The described systems 10 may utilize a modular construction such that any element can be removed or replaced with another element thus expanding the handling capability for various different sort of plant produce.

It will be appreciated that the specific embodiments of the present invention described above and illustrated in the accompanying drawings are set forth merely for purposes of example. Other variations, modifications, and applications of the present invention will readily occur to those skilled in the art. It is therefore clarified that all such variations are considered within the scope and spirit of the invention. Accordingly, the protection sought herein is as set forth in the claims below.

## Claims

1. A method for long term preservation of ready to eat minimally processed fruit or vegetable while retaining the nutrition properties and taste of the fresh fruit or vegetable, the method comprising the steps of:
a. providing at least: a fruit or vegetable, a sterilized seal-able package and a carbonated liquid;
g. processing the fruit or vegetable by at least washing and disinfecting the exterior of the fruit or vegetable;
k. placing the processed fruit or vegetable into the sterilized seal-able package;
l. filling the remaining volume of the seal-able package with the carbonated liquid;
m. sealing the seal-able package; and
n. storing the sealed package at a storage temperature of between 1°C to 40°C,
wherein steps g, k, 1 and m are performed under a disinfected processing environment.

2. The method as claimed in claim 1, wherein in step g, the washing and disinfecting of the exterior of the fruit or vegetable is made with a chilled disinfecting solution comprising water and an oxidizing agent.

3. The method as claimed in claim 2, wherein the oxidizing agent is ozone in an aqueous ozone solution at a concentration of between 0.5PPM to 2.0PPM and wherein the aqueous ozone solution is applied for a duration of between 0.25 to 6 minutes.

4. The method as claimed in claim 2, wherein the disinfecting solution is chilled to between 2°C and 4°C.

5. The method as claimed in claim 2, further comprising after step g, the step of:
h. removing the disinfecting solution from the minimally processed fruit or vegetable with forced clean air filtered through a HEPA filter of at least H13 HEPA class.

6. The method as claimed in claim 1, further comprising after step a, the steps of:
c. prewashing and disinfecting the exterior of the fruit or vegetable with a chilled disinfecting solution comprising water and an oxidizing agent; and
d. removing the disinfecting solution from the fruit or vegetable with forced air.

7. The method as claimed in claim 6, further comprising after step d, the step of:
e. keeping the minimally processed fruit or vegetable which are not directly packaged, in a cooled, dry, well-ventilated storage, out of direct sunlight.

8. The method as claimed in claim 1, further comprising after step a, the step of:
f. processing the fruit or vegetable by physically altering the fruit or vegetable from its whole state in order to obtain a fully edible product.

9. The method as claimed in claim 8, wherein the processing of the fruit or vegetable is made by one or more process selected from the group consisting of: opening, pealing, trimming, cutting, slicing, chopping, dicing, ricing, shredding, deseeding, separating, extracting and tearing.

10. The method as claimed in claim 8, wherein the processing of the fruit or vegetable is made in a clean processing area entirely and continuously kept under disinfecting environment, the environment comprising ozone gas at a concentration of between 30 to 200 PPM.

11. The method as claimed in claim 10, wherein in step f, a one or more processing tool or cutting knife used in the process is intermittently disinfected by aqueous ozone solution with concentration of between 1PPM to 2 PPM.

12. The method as claimed in claim 1, wherein the carbonated liquid have substantially the same pH value and same dissolved matter content as the minimally processed fruit or vegetable, in order to obtain osmotic pressure balance with the minimally processed fruit or vegetable, thus retaining the natural shape and texture of the fresh fruit or vegetable.

13. The method as claimed in claim 12, wherein the carbonated liquid is a fresh squeezed fruit or vegetable Juice.

14. The method as claimed in claim 12, wherein the carbonated liquid is a fresh squeezed fruit or vegetable Juice, made of the same type of fruit or vegetable as the minimally processed fruit or vegetable.

15. The method as claimed in claim 14, further comprising after step g, the steps of:
i. squeezing a portion of the minimally processed fruit or vegetable to fresh juice, without addition of preservatives; and
j. carbonizing the fresh squeezed fruit or vegetable juice with CO₂ serving as a preservation enhancer.

16. The method as claimed in claim 15, wherein the carbonation of the juice is performed by dissolving Carbon dioxide in the juice at pressure of at least 3 bar for a sufficient time to reach saturation, with the temperature of the juice being between 1°C to 10°C.

17. The method as claimed in claim 1, wherein the sterilized seal-able package is a glass or plastic bottle provided with a positive pressure holding hermetic cap.

18. The method as claimed in claim 1, wherein the storage temperature of the filled and sealed package is between 1°C to 12°C.

19. The method as claimed in claim 1, wherein the fruit or vegetable for processing are chosen during harvesting to include undamaged fruit or vegetable.

20. The method as claimed in claim 14, wherein the minimally processed fruit or vegetable are pomegranate seeds extracted from a pomegranate and the Juice is a pomegranate juice.

21. A system for long term preservation of ready to eat minimally processed fruit or vegetable while retaining the nutrition properties and taste of the fresh fruit or vegetable, the system comprising:
a) a conveyor provided with a washable transport surface, the transport surface comprising perforations smaller than the minimally processed fruit or vegetable;
b) a longitudinal shield surrounding the conveyor along a processing area, configured to prevent external contamination and enclose an over pressure disinfecting environment in the processing area;
c) a loading zone located adjacent a first end of the conveyor out of the processing area;
d) a first disinfection zone located along the conveyor within the processing area, the first disinfection zone comprising a plurality of emitters of a disinfectant solution;
e) a package filling zone for minimally processed fruit or vegetable, located in the processing area after the first disinfection zone;
f) a liquid filling zone located in the processing area after the package filling zone;
g) a sealing zone located in the processing area after the liquid filling zone;
wherein the conveyor speed is set to maintain the minimally processed fruit or vegetable at least 15 seconds within the disinfection zone, the temperature in the processing area is set between 1°C and 40°C, the disinfectant solution is thoroughly wetting the minimally processed fruit or vegetable, and the liquid used in the liquid filling zone is a carbonated liquid.

22. The system as claimed in claim 21 further comprising:
h) a first disinfectant removal zone located in the processing area after the first disinfection zone and before the package filling zone, the disinfectant removal is performed by forced filtered air, filtered through a HEPA filters of at least H13 HEPA class.

23. The system as claimed in claim 21 further comprising:
i) a second disinfection zone located along the conveyor out of the processing area, after the loading zone, the second disinfection zone comprising a plurality of emitters of a disinfectant solution;
j) a minimal processing zone located in the processing area after the second disinfection zone;

24. The system as claimed in claim 23 further comprising:
k) a second disinfectant removal zone located out of the processing area after the second disinfection zone and before the minimal processing zone.

25. The system as claimed in claim 23 wherein the minimal processing zone comprises tools configured to perform one or more of the processes selected from the group consisting of: opening, pealing, trimming, cutting, slicing, chopping, dicing, ricing, shredding, deseeding, separating, extracting and tearing.

26. The system as claimed in claim 21 wherein the wetting of the minimally processed fruit or vegetable with disinfectant solution, uses a low impact technique to avoid textural damage of the fruit or vegetable,
the low impact wetting technique is selected from the group consisting of: dripping, soft spray and liquid curtain.

27. The system as claimed in claim 21 wherein the disinfectant solution comprises water and an oxidizing agent selected from the group consisting of: Hypochlorite, Hydrogen-peroxide and ozone.

28. The system as claimed in claim 27 wherein the concentration of the oxidizing agent in the air after emission is between 30 to 200PPM.

29. The system as claimed in claim 27 wherein the oxidizing agent is ozone with a concentration of less than 5PPM in the aqueous ozone solution.

30. The system as claimed in claim 21, further comprising:
l) a pressure vessel for carbonizing the carbonated liquid.

31. The system as claimed in claim 30, further comprising:
m) a squeezer to squeeze a portion of the processed fruit or vegetable into a juice, the juice is fed into the pressure vessel and carbonated to serve as the carbonated liquid; and
n) a transport means to feed a portion of the processed fruit or vegetable into the squeezer.

## Patentansprüche

1. Verfahren zur Langzeitkonservierung von verzehrbereitem, minimal bearbeitetem Obst oder Gemüse unter Beibehaltung der Nährwerteigenschaften und des Geschmacks des frischen Obstes oder Gemüses, wobei das Verfahren folgende Schritte umfasst:
a. Bereitstellung von wenigstens: einer Frucht oder eines Gemüses, einer sterilisierten abdichtbaren Verpackung und einer kohlensäurehaltigen Flüssigkeit;
g. Verarbeiten der Frucht oder des Gemüses wenigstens durch Waschen und Desinfizieren des Äußeren der Frucht oder des Gemüses;
k. Anordnen der verarbeiteten Frucht oder des Gemüses in der sterilisierten abdichtbaren Verpackung;
I. Befüllen des verbleibenden Volumens der abdichtbaren Verpackung mit der kohlensäurehaltigen Flüssigkeit;
m. Versiegeln der abdichtbaren Verpackung; und
n. Einlagern der versiegelten Verpackung bei einer Lagertemperatur zwischen 1 bis 40°C, wobei die Schritte g, k, l und m in einer desinfizierten Arbeitsumgebung durchgeführt werden.

2. Verfahren nach Anspruch 1, bei welchem in Schritt g das Waschen und Desinfizieren des Äußeren der Frucht oder des Gemüses mit einer gekühlten Desinfektionslösung erfolgt, die Wasser und ein Oxidationsmittel umfasst.

3. Verfahren nach Anspruch 2, bei welchem das Oxidationsmittel Ozon in einer wässrigen Ozonlösung bei einer Konzentration zwischen 0,5 ppm und 2,0 ppm ist und wobei die wässrige Ozonlösung für die Dauer zwischen 0,25 bis 6 Minuten aufgebracht wird.

4. Verfahren nach Anspruch 2, bei welchem die Desinfektionslösung zwischen 2°C und 4°C gekühlt wird.

5. Verfahren nach Anspruch 2, weiterhin umfassend nach dem Schritt g den Schritt: h. Entfernen der Desinfektionslösung von der minimal verarbeiteten Frucht oder dem Gemüse mit sauberer Gebläseluft, die durch einen HEPA Filter gefiltert ist, der wenigstens die H13 HEPA Klassifikation erfüllt.

6. Verfahren nach Anspruch 1, weiterhin umfassend nach Schritt a. den Schritt:
c. Vorwaschen und Desinfizieren des Äußeren der Frucht oder des Gemüses mit einer gekühlten Desinfektionslösung umfassend Wasser und ein Oxidationsmittel; und
d. Entfernen der Desinfektionslösung von der Frucht oder dem Gemüse mit Gebläseluft.

7. Verfahren nach Anspruch 6, weiterhin umfassend nach dem Schritt d. den Schritt:
e. Lagern der minimal verarbeiteten Frucht oder des Gemüses in zunächst nicht verpacktem Zustand in einem gekühlten, trockenen und gut belüfteten Lager, außerhalb direkter Sonneneinstrahlung.

8. Verfahren nach Anspruch 1, weiterhin umfassend nach Schritt a. den Schritt:
f. Verarbeiten der Frucht oder des Gemüses durch körperliche Veränderung der Frucht oder des Gemüses von seinem ganzen Zustand, um ein essbares Erzeugnis zu erhalten.

9. Verfahren nach Anspruch 8, bei welchem die Verarbeitung der Frucht oder des Gemüses durch einen oder mehrere der Verarbeitungschritte ausgewählt aus einer Gruppe von Verarbeitungsschritten durchgeführt wird bestehend aus: Öffnen, Schälen, Beschneiden, Schneiden, zu Scheiben verarbeiten, Hacken, Würfeln, Pressen, Shreddern, Entkeimen, Trennen, Extrahieren und Reißen.

10. Verfahren nach Anspruch 8, bei welchem das Verarbeiten der Frucht oder des Gemüses in einem Reinraumbereich erfolgt, der vollständig und kontinuierlich unter desinfizierender Umgebung gehalten wird, wobei die Umgebung ein Ozon Gas bei einer Konzentration zwischen 30 und 200 ppm enthält.

11. Verfahren nach Anspruch 10, bei welchem in Schritt f. eines oder mehrere Verarbeitungswerkzeuge oder ein bei der Verarbeitung verwendetes Messer während des Verfahrens intermittierend mittels einer wässrigen Ozonlösung mit einer Konzentration zwischen 1 ppm und 2 ppm desinfiziert wird.

12. Verfahren nach Anspruch 1, bei welchem die kohlensäurehaltige Flüssigkeit im Wesentlichen den gleichen pH-Wert und die gleichen Wasserinhaltsstoffe wie die minimal verarbeitete Frucht oder das Gemüse aufweist, um das osmotische Druckgleichgewicht innerhalb der minimalverarbeiteten Frucht oder des Gemüses zu erhalten, wodurch die natürliche Form und Textur des frischen Obstes oder Gemüses erhalten bleibt.

13. Verfahren nach Anspruch 12, bei welchem die kohlensäurehaltige Flüssigkeit ein frisch gepresster Frucht oder Gemüsesaft ist.

14. Verfahren nach Anspruch 12, bei welchem die kohlensäurehaltige Flüssigkeit frisch gepresster Frucht- oder Gemüsesaft ist, die oder der aus der gleichen Art Frucht oder Gemüse wie die minimal verarbeitete Frucht oder Gemüse ist.

15. Verfahren nach Anspruch 14, weiterhin umfassend nach Schritt g. den Schritt:
i. Pressen eines Teils der minimal verarbeiteten Frucht oder des Gemüses zu frischem Saft, ohne die Beigabe von Konservierungsmittel; und
j. Das Versetzen des frisch gepressten Frucht- oder des Gemüsesafts mit CO² als Konservierungsverbesserer.

16. Verfahren nach Anspruch 15, bei dem die Karbonisation des Safts durch Lösen von Kohlendioxid in dem Saft bei einem Druck von wenigstens 3 bar für eine ausreichende Zeit, um Sättigung zu erzielen, mit einer Temperatur des Safts zwischen 1 und 10°C durchgeführt wird.

17. Verfahren nach Anspruch 1, bei welchem die sterilisierte abdichtbare Verpackung eine Glas- oder Plastikflasche ist, die mit einem hermetischen Verschluss versehen ist, welcher einen positiven Innendruck halten kann.

18. Verfahren nach Anspruch 1, bei welchem die Lagertemperatur der gefüllten und abgedichteten Verpackung zwischen 1 und 12°C beträgt.

19. Verfahren nach Anspruch 1, bei welchem die Frucht oder das Gemüse zur Verarbeitung während der Ernte nach unbeschädigter Frucht oder unbeschädigtem Gemüse selektiert wird.

20. Verfahren nach Anspruch 14, bei welchem die minimal verarbeitete Frucht oder das Gemüse Granatapfelsamen sind, die aus Granatäpfeln extrahiert wurden und der Saft ein Granatapfelsaft ist.

21. System zur Langzeitkonservierung von verzehrbereiter Frucht oder Gemüse unter Beibehaltung der Nährwerteigenschaften und des Geschmacks der frischen Frucht oder des Gemüses, das System umfassend:
a) einen Förderer, der mit einer abwaschbaren Transportfläche versehen ist, wobei die Transportfläche Perforationen umfasst, die kleiner als die minimal verarbeitete Frucht oder das Gemüse sind;
b) eine längliche Abschirmung, die den Förderer entlang eines Verarbeitungsbereichs umgibt und die dazu ausgebildet ist, eine äußere Kontamination zu verhindern und eine Überdruck-Desinfektionsumgebung in dem Verarbeitungsbereich bereitzustellen;
c) eine Ladezone, die in der Nähe eines ersten Endes des Förderers aus dem Verarbeitungsbereich hinaus angeordnet ist;
d) ein erster Desinfektionsbereich, der entlang des Förderers innerhalb des Verarbeitungsbereichs angeordnet ist, wobei der erste Desinfektionsbereich eine Vielzahl von Ausgaben für eine Desinfektionslösung umfasst;
e) ein Verpackungs-Füllzone für minimal verarbeitete Frucht oder Gemüse, die in dem Verarbeitungsbereich nach der ersten Desinfektionszone angeordnet ist;
f) eine Flüssigkeitsabfüllzone, die in dem Verarbeitungsbereich nach der Verpackungsfüllzone angeordnet ist;
g) eine Versiegelungszone in dem Verarbeitungsbereich nach der Flüssigkeitsabfüllzone;
wobei die Förderergeschwindigkeit so eingestellt wird, dass die minimal verarbeitete Frucht oder das Gemüse wenigstens 15 Sekunden innerhalb der Desinfektionszone gehalten wird, die Temperatur in dem Verarbeitungsbereich zwischen 1 und 40°C eingestellt wird, die Desinfektionslösung gründlich die minimal bearbeitete Frucht oder das Gemüse benetzt und die in der Flüssigkeitsabfüllzone verwendete Flüssigkeit eine kohlensäurehaltige Flüssigkeit ist.

22. System nach Anspruch 21 weiterhin umfassend:
h) eine erste Desinfektionsmittel-Entfernungszone, die in dem Verarbeitungsbereich nach der ersten Desinfektionszone und vor der Verpackungs-Füllzone angeordnet ist, wobei die Entfernung des Desinfektionsmittels durch Filterung der Gebläseluft durchgeführt wird, die durch HEPA Filter wenigstens der Klassifikation H 13 der HEPA Klassifikation gefiltert wird.

23. System nach Anspruch 21 weiterhin umfassend:
i) eine zweite Desinfektionszone, die entlang des Förderers aus dem Verarbeitungsbereich nach der Ladezone angeordnet ist, wobei die zweite Desinfektionszone eine Vielzahl von Ausgaben für eine Desinfektionslösung umfasst;
j) eine Minimalverarbeitungszone, die in dem Verarbeitungsbereich nach der zweiten Desinfektionszone angeordnet ist.

24. System nach Anspruch 23 weiterhin umfassend:
k) eine zweite Desinfektionsmittel-Entfernungszone, die außerhalb des Verarbeitungsbereichs nach der zweiten Desinfektionszone und vor der Minimalverarbeitungszone angeordnet ist.

25. System nach Anspruch 23, bei welchem die Minimalverarbeitungszone Werkzeuge umfasst, die dazu ausgebildet sind, einen oder mehrere der Verarbeitungsschritte durchzuführen, die ausgewählt sind aus der Gruppe bestehend aus: Öffnen, Schälen, Beschneiden, Schneiden, zu Scheiben schneiden, Würfeln, Pressen, Shreddern, Entkeimen, Trennen, Extrahieren und Reißen.

26. System nach Anspruch 21, bei welchem das Benetzen der minimal verarbeiteten Frucht oder des Gemüses mit Desinfektionslösung unter Verwendung einer impulsarmen Technik zur Vermeidung von Texturschäden der Frucht oder des Gemüses erfolgt,
die impulsarme Benetzungstechnik ist ausgewählt aus der Gruppe bestehend aus: Tropfen, weicher Sprühnebel und flüssiger Vorhang.

27. System nach Anspruch 21, bei welchem die Desinfektionslösung Wasser und ein Oxidationsmittel umfasst, das ausgewählt ist aus einer Gruppe bestehend aus: Hypochlorid, Wasserstoffperoxid und Ozon.

28. System nach Anspruch 27, bei welchem die Konzentration des Oxidationsmittels in der Luft nach Ausgabe zwischen 30 und 200 ppm beträgt.

29. System nach Anspruch 27, bei welchem das Oxidationsmittel Ozon ist, das mit einer Konzentration von weniger als 5 ppm in der wässrigen Ozonlösung vorliegt.

30. System nach Anspruch 21 weiterhin umfassend:
l) einen Druckbehälter zur Karbonisierung der kohlensäurehaltigen Flüssigkeit.

31. System nach Anspruch 30 weiterhin umfassend:
m) eine Presse, um einen Teil der verarbeiteten Frucht oder des Gemüses zu Saft zu pressen, wobei der Saft dem Druckbehälter zugeführt und darin karbonisiert wird, um als kohlensäurehaltige Flüssigkeit zu dienen; und
n) Transportmittel, um einen Teil der verarbeiteten Frucht oder des Gemüses in die Presse zu fördern.

## Revendications

1. Un procédé pour une conservation à long terme de fruits ou légumes traités au minimum prêts à consommer tout en gardant les propriétés nutritionnelles et le goût des fruits ou légumes frais, le procédé comprenant les étapes suivantes :
a. la fourniture d'au moins : des fruits ou légumes, un emballage hermétique stérilisé et un liquide carbonaté ;
g. le traitement des fruits ou légumes par au moins le lavage et la désinfection de l'extérieur des fruits ou légumes ;
k. le placement des fruits ou légumes traités dans l'emballage hermétique stérilisé ;
I. le remplissage du volume restant de l'emballage hermétique par du liquide carbonaté ;
m. la fermeture hermétique de l'emballage hermétique ; et
n. le stockage de l'emballage fermé hermétiquement à une température de stockage située entre 1°C et 40°C,
dans lequel les étapes g, k, l et m sont effectuées dans un environnement de traitement désinfecté.

2. Le procédé selon la revendication 1, dans lequel dans l'étape g, le lavage et la désinfection de l'extérieur des fruits ou légumes sont effectués avec une solution de désinfection réfrigérée comprenant de l'eau et un agent oxydant.

3. Le procédé selon la revendication 2, dans lequel l'agent oxydant est de l'ozone dans une solution aqueuse d'ozone à une concentration située entre 0,5 PPM et 2,0 PPM et dans lequel la solution aqueuse d'ozone est appliquée pendant une durée située entre 0,25 et 6 minutes.

4. Le procédé selon la revendication 2, dans lequel la solution de désinfection est réfrigérée entre 2°C et 4°C.

5. Le procédé selon la revendication 2, comprenant en outre après l'étape g, l'étape suivante :
h. la suppression de la solution de désinfection des fruits ou légumes traités au minimum avec de l'air propre forcé filtré à travers un filtre HEPA d'au moins une classe HEPA H13.

6. Le procédé selon la revendication 1, comprenant en outre après l'étape a, les étapes suivantes :
c. le prélavage et la désinfection de l'extérieur des fruits ou légumes avec une solution de désinfection réfrigérée comprenant de l'eau et un agent oxydant; et
d. la suppression de la solution de désinfection des fruits ou légumes avec de l'air forcé.

7. Le procédé selon la revendication 6, comprenant en outre après l'étape d, l'étape suivante :
e. le maintien des fruits ou légumes traités au minimum qui ne sont pas emballés directement dans un lieu de stockage frais, sec, bien ventilé, à l'abri de la lumière directe du soleil.

8. Le procédé selon la revendication 1, comprenant en outre après l'étape a, l'étape suivante :
f. le traitement des fruits ou légumes en modifiant physiquement les fruits ou légumes à partir de leur état entier afin d'obtenir un produit entièrement comestible.

9. Le procédé selon la revendication 8, dans lequel le traitement des fruits ou légumes est effectué par un ou des processus sélectionnés à partir du groupe se composant de : l'ouverture, le pelage, la taille, le découpage, le découpage en tranches, le hachage, le découpage en dés, le tranchage, le déchiquetage, l'épépinage, la séparation, l'extraction et l'arrachage.

10. Le procédé selon la revendication 8, dans lequel le traitement des fruits ou légumes est effectué dans une zone de traitement propre maintenue entièrement et en continu dans un environnement de désinfection, l'environnement comprenant de l'ozone gazeux à une concentration située entre 30 et 200 PPM.

11. Le procédé selon la revendication 10, dans lequel dans l'étape f, un ou plusieurs outils de traitement ou couteaux de coupe utilisés dans le processus sont désinfectés de manière intermittente par une solution aqueuse d'ozone ayant une concentration située entre 1 PPM et 2 PPM.

12. Le procédé selon la revendication 1, dans lequel le liquide carbonaté a sensiblement la même valeur de pH et le même contenu de matière dissoute que les fruits ou légumes traités au minimum, afin d'obtenir un équilibre de pression osmotique avec les fruits ou légumes traités au minimum, ce qui permet de garder la forme et la texture naturelle des fruits ou légumes frais.

13. Le procédé selon la revendication 12, dans lequel le liquide carbonaté est un jus de fruits ou légumes pressé frais.

14. Le procédé selon la revendication 12, dans lequel le liquide carbonaté est un jus de fruits ou légumes pressé frais, composé du même type de fruits ou légumes que les fruits ou légumes traités au minimum.

15. Le procédé selon la revendication 14, comprenant en outre après l'étape g, les étapes suivantes :
i. la pression en jus frais d'une partie des fruits ou légumes traités au minimum, sans ajout de conservateurs ; et
j. la carbonisation du jus de fruits ou légumes frais pressé avec du CO₂ servant d'exhausteur de conservation.

16. Le procédé selon la revendication 15, dans lequel la carbonatation du jus est effectuée en dissolvant du dioxyde de carbone dans le jus à une pression d'au moins 3 bars pendant un temps suffisant pour atteindre une saturation, avec la température du jus se situant entre 1°C et 10°C.

17. Le procédé selon la revendication 1, dans lequel l'emballage hermétique stérilisé est une bouteille en verre ou en plastique munie d'un bouchon hermétique de maintien de pression positive.

18. Le procédé selon la revendication 1, dans lequel la température de stockage de l'emballage rempli et fermé hermétiquement se situe entre 1°C et 12°C.

19. Le procédé selon la revendication 1, dans lequel les fruits ou légumes pour le traitement sont choisis pendant la récolte parmi des fruits ou légumes non endommagés.

20. Le procédé selon la revendication 14, dans lequel les fruits ou légumes traités au minimum sont des graines de grenade extraites d'une grenade et le jus est un jus de grenade.

21. Un système pour une conservation à long terme de fruits ou légumes traités au minimum prêts à consommer tout en gardant les propriétés nutritionnelles et le goût des fruits ou légumes frais, le système comprenant les étapes suivantes :
a) un convoyeur comprenant une surface de transport lavable, la surface de transport comprenant des perforations plus petites que les fruits ou légumes traités au minimum ;
b) une protection longitudinale entourant le convoyeur le long d'une zone de traitement, conçue pour empêcher une contamination externe et entourer un environnement de désinfection sous pression dans la zone de traitement ;
c) une zone de chargement située de manière adjacente à une première extrémité du convoyeur à l'extérieur de la zone de traitement ;
d) une première zone de désinfection située le long du convoyeur à l'intérieur de la zone de traitement, la première zone de désinfection comprenant une pluralité d'émetteurs d'une solution désinfectante ;
e) une zone de remplissage d'emballage pour les fruits ou légumes traités au minimum, située dans la zone de traitement après la première zone de désinfection ;
f) une zone de remplissage de liquide située dans la zone de traitement après la zone de remplissage d'emballage ;
g) une zone d'étanchéité située dans la zone de traitement après la zone de remplissage de liquide ;
dans lequel la vitesse du convoyeur est réglée pour maintenir les fruits ou légumes traités au minimum au moins 15 secondes à l'intérieur de la zone de désinfection, la température dans la zone de traitement est réglée entre 1°C et 40°C, la solution désinfectante mouille soigneusement les fruits ou légumes traités au minimum et le liquide utilisé dans la zone de remplissage de liquide est un liquide carbonaté.

22. Le système selon la revendication 21 comprenant en outre :
h) une première zone de suppression de désinfectant située dans la zone de traitement après la première zone de désinfection et avant la zone de remplissage d'emballage, la suppression de désinfectant est effectuée par un air filtré forcé, filtré à travers des filtres HEPA d'au moins une classe HEPA H13.

23. Le système selon la revendication 21 comprenant en outre :
i) une deuxième zone de désinfection située le long du convoyeur à l'extérieur de la zone de traitement, après la zone de chargement, la deuxième zone de désinfection comprenant une pluralité d'émetteurs d'une solution désinfectante ;
j) une zone de traitement minimal située dans la zone de traitement après la deuxième zone de désinfection.

24. Le système selon la revendication 23 comprenant en outre :
k) une deuxième zone de suppression de désinfectant située à l'extérieur de la zone de traitement après la deuxième zone de désinfection et avant la zone de traitement minimal.

25. Le système selon la revendication 23 dans lequel la zone de traitement minimal comprend des outils configurés pour effectuer un ou plusieurs des traitements sélectionnés à partir du groupe se composant de : l'ouverture, le pelage, la taille, le découpage, le découpage en tranches, le hachage, le découpage en dés, le tranchage, le déchiquetage, l'épépinage, la séparation, l'extraction et l'arrachage.

26. Le système selon la revendication 21 dans lequel le fait de mouiller les fruits ou légumes traités au minimum avec une solution désinfectante utilise une technique à faible impact pour éviter des dommages sur la texture des fruits ou légumes,
la technique de mouillage à faible impact est sélectionnée à partir du groupe se composant de : égouttement, pulvérisation douce et rideau de liquide.

27. Le système selon la revendication 21 dans lequel la solution désinfectante comprend de l'eau et un agent oxydant sélectionnés à partir du groupe se composant de : hypochlorite, peroxyde d'hydrogène et ozone.

28. Le système selon la revendication 27 dans lequel la concentration de l'agent oxydant dans l'air après émission se situe entre 30 et 200 PPM.

29. Le système selon la revendication 27 dans lequel l'agent oxydant est de l'ozone avec une concentration de moins de 5 PPM dans la solution aqueuse d'ozone.

30. Le système selon la revendication 21, comprenant en outre :
1) un récipient sous pression pour la carbonisation du liquide carbonaté.

31. Le système selon la revendication 30, comprenant en outre :
m) un appareil à jus pour presser une partie des fruits ou légumes traités en un jus, le jus est introduit dans le récipient sous pression et carbonaté pour servir de liquide carbonaté ; et
n) des moyens de transport pour introduire une partie des fruits ou légumes traités dans l'appareil à jus.
